(19) Europäisches Patentamt
European Patent Office
Office européen des brevets

(11) Publication number: **0 202 041**
**A2**

# (12) EUROPEAN PATENT APPLICATION

(21) Application number: 86303032.6

(22) Date of filing: 22.04.86

(51) Int. Cl.$^4$: B 29 C 51/14
B 29 C 67/14

(30) Priority: 15.05.85 GB 8512243

(43) Date of publication of application: 20.11.86 Bulletin 86/47

(84) Designated Contracting States: BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Buchan, Cattanach James
20 Knaresborough Avenue
Marton Middlesbrough Cleveland(GB)

(74) Representative: Downer, John Michael et al,
Imperial Chemical Industries PLC Legal Department: Patents PO Box 6 Bessemer Road
Welwyn Garden City Herts, AL7 1HD(GB)

## (54) Shaped articles from fibre composite materials.

(57) A method of forming a shaped article comprising providing a feedstock consisting of a plurality of superimposed layers of parallel, aligned filaments in a thermoformable polymer matrix in which the continuous filaments have been severed in predetermined positions in the layers, heating the feedstock to a temperature at which the thermoformable polymer matrix can be formed, clamping the plurality of layers at the perimeter of the superimposed layers and applying a differential pressure across the clamped assembly of layers to cause relative movement of the layers enabling the feedstock to take up a desired shape. The method enables a greater degree of forming to be achieved whilst at the same time giving greater control over the disposition of the filaments in the final article.

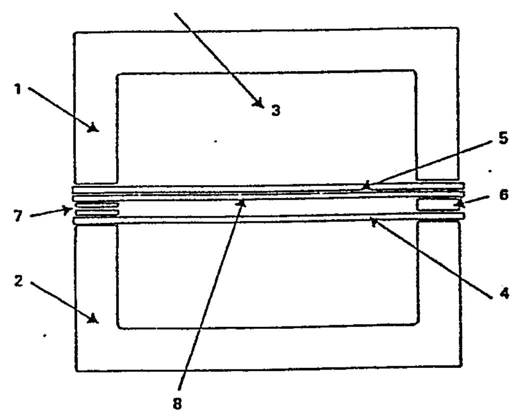

FIG 1.

EP 0 202 041 A2

SHAPED ARTICLES FROM FIBRE COMPOSITE MATERIALS

This invention relates to a method of forming shaped articles from fibre reinforced thermoplastic composite materials.

Fibre reinforced composite materials are now available in which high volume contents of fibres are present as continuous, collimated filaments which are substantially totally wetted by a thermoplastic polymer thereby providing a material in which the strength and modulus properties of the fibres can be utilised to the full. The presence of the fibres in continuous form provides designers with a high performance product suitable for applications having exacting requirements. The use of a thermoplastic matrix confers the added benefit of thermoformability but this is, of course, limited by the presence of the inextensible fibres. Much progress has been made in developing methods which permit substantial shaping of these composites to be effected. For example, the use of plastically deformable, preferably superplastically deformable metal diaphragms has permitted an exceptional degree of shaping to be obtained from composites containing continuous fibres. This process is described in United Kingdom Patent Applications 8 406 869 and 8 429 906, now published as European Patent Publication No. 155 820.

A method has now been developed which extends the ability to shape continuous fibre reinforced composites.

According to the invention there is provided a method of forming a shaped article from a thermoformable matrix feedstock containing parallel, aligned, continuous filaments comprising providing a feedstock consisting of a plurality of superimposed layers of parallel, aligned filaments in a thermoformable matrix in which the continuous filaments have been severed in predetermined positions in the layers, heating the feedstock to a

temperature at which the thermoformable polymer matrix can be formed, clamping the plurality of layers at the perimeter of the superimposed layers and applying a differential pressure across the clamped assembly of layers to cause relative movement of the layers enabling the feedstock to take up a desired shape and conferring form stability on the shaping obtained.

Whilst the reinforced thermoformable feedstock will normally be of a reinforced thermoplastic feedstock wherein the matrix polymer is a thermoplastic the invention also includes the use of reinforced thermosettable materials as feedstocks which can be shaped whilst in a flowable condition and subsequently cured.

The method not only permits a greater degree of shaping to be obtained but gives greater control over the ultimate disposition of the filaments within the finally shaped article so that designers can rely on the performance of such articles with greater confidence.

Accordingly the method of the invention provides a shaped article comprising reinforcing fibres in a polymer matrix characterised in that the filaments are present in superimposed layers, optionally interwoven, the filaments in a given layer being discontinuous through the width and breadth of the layer and being disposed in predetermined positions within the layer.

In previous methods of forming shaped articles from fibre reinforced composites the filaments in the layer are disposed as generally continuous filaments extending across the dimensions of the whole layer. The methods formerly used effect shaping by slippage between layers of fibres and spreading of fibres within the layer by stretching an unrestrained workpiece, for example an unrestrained workpiece manipulated between two superplastically deformable alloy diaphragms. Such a method gives much less control over the eventual disposition of the filaments within the shaped article.

The discontinuous nature of the fibres in a given layer will not be of a random nature but will be predetermined to ensure that a region of discontinuity in the article does not coincide with a discontinuous region in a superimposed layer. The regions of discontinuity will be the minimum required to effect the desired shaping of the sheet.

In the method of the invention the shaping will generally be performed on a number of pre-preg plies the fibres of which have been severed in predetermined positions the prepregs being assembled relative to each other so that on shaping the disposition of the fibres is known and the discontinuities are such as not to adversely affect the designed performance of the shaped article. The plies, with appropriate portions severed may be loosely laid up in the shaping apparatus or they may be consolidated, at least in localised areas, to form an integral and handleable workpiece prior to placing in the shaping apparatus.

The method of shaping applied to the workpiece or assembly of prepregs making up the workpiece can take a number of forms. Thus the techniques of hydroforming, roll forming etc can be applied but a preferred method utilises a plastically or elastically deformable diaphragm which is controlled by a differential pressure across the diaphragm and the workpiece. United Kingdom Patent Applications 8 406 869 and 8 429 906, published as European Patent Application No. 155 820 disclose a method in which the diaphragm is of metal, preferably plastically deformable metal. These diaphragms may be replaced by thermoplastic organic polymer diaphragms which have sufficient melt strength to dominate the shaping of the reinforced composite workpiece at the temperature at which the workpiece requires to be heated in order to be thermoformed.

Alternatively, organic polymer diaphragms which are not thermoplastic can be used, providing they are sufficiently extensible without rupture at the temperatures employed and have sufficient thermal stability to retain integrity at the temperature of the thermoforming operation. Diaphragms of thermosetting material of high glass transition temperature are suitable for this purpose. A particularly useful class of such polymers are the polyimide films supplied by Ube Industries Limited under the trade name 'Upilex'. The grade designated Upilex R is particularly useful in that a 25 micron thickness film shows an elongation of 150% at 200°C and an elongation of 250% at 300°C.

Upilex is produced in a polycondensation reaction between 3,3',4,4' biphenyl tetracarboxylic acid or its anhydride, ester or salt, and an aromatic diamine of formula $H_2N-R-NH_2$ to give a polymer with repeat unit

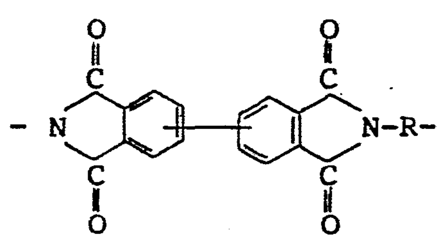

These materials have glass transition temperatures in excess of 250°C.

Preparation of these polyimides is described in British Patent 2 032 926B. The preferred aromatic diamines used are of formula

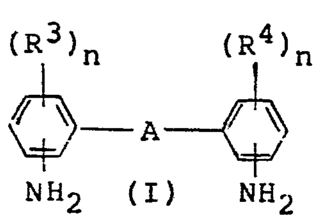

(I)

and

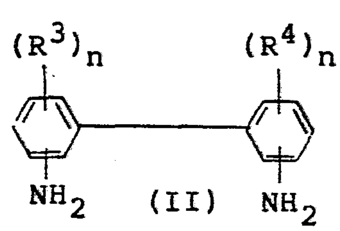

(II)

wherein $R^3$ and $R^4$ respectively, independently from each other, represent a member selected from hydrogen atoms, lower alkyl radicals, preferably, having 1 to 3 carbon atoms, alkoxy radicals, preferably, having 1 to 3 carbon atoms, n represents an integer of from 1 to 4, and A represents a divalent radical selected from $-O-,-S-,-CO-,-SO_2,-,-SO-,-CH_2-$ and $-C(CH_3)_2-$.

The aromatic diamines of the formula (I) may involve diamino-diphenyl ether compounds, for example, 4,4'-diaminodiphenyl ether, 3,3'-dimethyl-4,4'-diaminodiphenyl ether 3,3'-diaminodiphenyl ether and 3,3'-dimethoxy-4,4'-diaminodiphenyl ether; diaminodiphenyl thioeither compounds, diamino benzophenone compounds, diamino diphenyl methane compounds and diamino diphenyl propane compounds.

A particularly useful feature of these products is their high thermal stability making it possible to use them at temperatures of the order of 400°C for limited periods, thus enabling composites in which the matrix polymer has a processing temperature of about 400°C to be shaped according to the process.

The forming operation using plastically or elastically deformable diaphragms may be conducted at a range of temperatures dependent on the material of the thermoformable feedstock. Thus when the feedstock has a thermosettable matrix the operation can be conducted at least down to room temperature with elastomeric sheets of low glass transition temperature or at least up to 250°C or higher with appropriate thermoplastic sheets. The conditions used will depend on the cure times of the thermosetting resins employed as the matrix of the reinforced formable composite. For convenience the sheet should be capable of withstanding the thermal treatment experienced during curing of the thermosettable resin. Generally this is in the range 120° to 180°C, although it

may be higher. Suitable elastomeric materials include silicone rubbers, chlorosulphonated ethylene rubbers, chlorinated butadiene rubbers, polyurethane rubbers, polysulphide rubbers and natural and synthetic rubbers. Particularly useful rubbers are those that can withstand repeated use at the temperatures employed, particularly at the curing temperatures. Suitable plastically deformable diaphragm materials include any materials which are plastically deformable in a convenient temperature range with respect to the need to complete the shaping operation before the cure of the thermosettable material is so far advanced that reorganisation of the filaments in the shaping, by virtue of the pressures applied through the sheet, becomes impracticable. Suitable materials include poly(methyl methacrylate) and its copolymers, polyvinyl chloride and its copolymers, polyamides, polyvinyl alcohol and polyesters.

In the case of the shaping of thermosettable feedstocks it is not necessary to complete curing of the feedstock as part of the shaping cycle. It is sufficient that the article is shaped to the desired shape and provided with form stability so that it can be removed from the shaping apparatus without deformation and subsequently cured, optionally as part of a larger article to be cured.

When the thermoformable material has a thermoplastic polymer matrix it will be formed above its softening temperature, preferably using a plastically deformable metal diaphragm or an organic polymeric material having a glass transition temperature greater than the glass transition temperature of the thermoplastic material forming the matrix.

In yet another process for thermoplastic feedstocks a workpiece which has been consolidated into a sheet so as to have a non-porous surface may be formed whilst

restrained at its perimeter by the application of high, but differential, pressures to both sides of the workpiece.

The lay up of plies in the workpiece should be such that in a given layer only one end of the continuous fibres is restrained so that there is freedom for the given layer to be extended in the direction of alignment of the fibres. It will be clear that plies may be present in the layup in which neither end of the continuous fibres is restrained, but these may only be present to a limited extent and must be supported by other plies in the lay-up.

The extent to which the ends of severed plies should overlap in adjacent plies in the article is determined by the properties required of the final article. Preferably, the overlap should be sufficient to ensure that the shear strength of the overlap should at least be equal to the tensile strength of a single ply sheet of the same thickness so that the axial strength in the direction of the fibres is unaffected by the presence of the overlap.

The invention may be used to produce shaped articles for use in high performance applications where an optimum and predictable performance is required or may be used in less exacting applications where an improvement in formability of continuous fibre composites is required.

The invention is illustrated with reference to the following examples.

EXAMPLE 1

An apparatus for forming shaped articles according to the invention is shown in Figure 1.

In Figure 1 mating shells, 1 and 2 provide a chamber, shown generally as 3, within which shaping operations can be performed. Shells 1 and 2 are provided with heating means (not shown) so that chamber 3 can effectively act as an oven of controlled temperature. Means for providing

pressure and vacuum are also provided (not shown). In Figure 1 the shells seal on metal diaphragms 4 and 5 composed of a superplastically formable alloy. Diaphragms 4 and 5 are spaced apart by annular ring 6 corresponding in perimeter to the perimeter of shells 1 and 2. Ring 6 is provided with a bore 7 disposed radially through the annulus to which a vacuum source (not shown) can be connected so that the space between diaphragms 4 and 5 can be evacuated. Assembled plies 8 with desired severed portions is shown located between diaphragms 4 and 5 and extending to be restrained at the perimeter between diaphragm 5 and ring 6. In operation shells 1 and 2 are engaged with sufficient pressure to maintain a seal between shells 1 and 2 and diaphragms 5 and 4 respectively and between the surfaces of the perimeter of assembled plies 8 and mating members 5 and 6, whilst the diaphragm shaping proceeds. Vacuum is applied at 7 to remove substantially all free air present between the diaphragms. A differential pressure is applied across opposing diaphragm faces, whilst the diaphragms and the workpiece are at an elevated temperature. After the desired shaping has been induced the shaping may be allowed to cool within the mould or the assembly of workpiece between the diaphragms may be removed whilst still under vacuum as an umbilical pack for cooling outside the mould.

The assembled plies 8 were laid up from six individual plies, one of which is shown in Figure 2. In Figure 2 two diametrically opposed cuts normal to the axial direction of the fibres in the ply are represented as AA' and BB'. A third scarf cut X lies at an angle of 75°C to the fibre direction and severs the remainder of the fibres in the ply but is non-connecting with the diametral cuts thereby preserving the integrity of the ply. The position of cut X was varied for each ply. Figure 3 shows the disposition of the six plies and the

positioning of the predetermined severance lines. All the plies were laid up with unidirectional disposition of the fibres. The prepreg from which the individual plies were cut was sheet of unidirectional carbon filaments in a matrix of polyetheretherketone polymer (having a melt viscosity of 100 $Ns/m^2$). The fibre content of the prepreg was 68% by weight.

For fabrication the oven was heated to 390°C. A pack consisting of two Supral alloy sheets, the assembly of six plies described above and the annular sealing ring were clamped between the two halves of the oven mould. Vacuum was applied through the bore 7 to evacuate the pack. After a delay of 15 minutes to enable the assembled plies to reach a temperature of 380° to 390°C a differential of 2.7 bar pressure was slowly applied over 30 minutes to blow a dome from the plies. After cooling the assembly inspection showed that the plies had consolidated with each other and that the depth of draw of the 158 mm diameter pack was 36 mm.

Figure 4 shows a plan view of the shaping produced. The dotted lines in Figure 4 represent the witness lines observed on the shaping which indicate separation and lateral slippage of material at scarf lines X of Figures 2 and 3. The presence of triangular holes as shown in Figure 4 and a continuity of material along the line AA'B'B of Figure 4 demonstrates the transverse spread of the six unidirectional plies and the practical feasibility of this method of providing increased thermoformability to continuous fibre composites.

## EXAMPLE 2

The procedure of Example 1 was extended to a quasiisotropic lay up of fibre directions. Pairs of plies were used to make up eight layers of material (ie sixteen plies in all). Each pair of plies consisted of plies as shown in Figure 2 with the scarf lines X being positioned as

indicated for layer 1 and layer 3 of Figure 3. The plies were superimposed to have a common fibre direction. The orientation of fibres in the eight layers layed up from these pairs of plies was +45°/90°/-45°/0°/0°/-45°/90°/+45° where the values given are the direction of the fibres of the layer with respect to a fixed axis.

The procedure of Example 1 was followed using a preconsolidation pressure of 8.4 bar on either side of the Supral diaphragm. The assembly was thermoformed at 390°C by reducing this pressure on one side of the assembly by 0.35 bar incremental steps until a shaping of desired profile was formed. After cooling the article was examined visually. It had excellent surface gloss with faint witness lines which identified the ends of the severed plies and confirmed that the desired movement within the plies had been effected. No radial slip was observed. An impressive transverse spread of fibres was observed. The depth of draw as 56 mm relative to a ply diameter of 158 mm. This is equivalent to an extension of about 30% in the diametral path length.

CLAIMS

1. A method of forming a shaped article from a thermoformable matrix feedstock containing parallel, aligned, continuous filaments comprising providing a feedstock consisting of a plurality of superimposed layers of parallel, aligned filaments in a thermoformable polymer matrix in which the continuous filaments have been severed in predetermined positions in the layers, heating the feedstock to a temperature at which the thermoformable polymer matrix can be formed, clamping the plurality of layers at the perimeter of the superimposed layers and applying a differential pressure across the clamped assembly of layers to cause relative movement of the layers enabling the feedstock to take up a desired shape and conferring form stability on the shaping obtained.

2. A method according to claim 1 in which the feedstock comprises an assembly of loose laid superimposed layers.

3. A method according to claim 1 in which the feedstock comprises superimposed layers which have been consolidated together at least to the extent that the feedstock is an integral and handleable workpiece.

4. A method according to any one of claims 1 to 3 in which the feedstock of superimposed layers contains some layers the ends of which are not restrained when the clamping is applied.

5. A method according to any one of claims 1 to 4 in which shaping of the assembly of layers is effected by the use of at least one plastically or elastically deformable diaphragm.

6. A method according to claim 5 in which the plastically deformable diaphragm is a metal diaphragm.

7. A method according to claim 5 wherein the plastically deformable diaphragm is a thermoplastic organic polymer diaphragm.

8. A method according to claim 5 wherein the diaphragm is a thermosetting polymer diaphragm.

9. A method according to claim 3 in which the workpiece has been consolidated so that it has a non-porous surface and is shaped whilst restrained at its perimeter by the application of high, but differential, pressures to both sides of the workpiece.

10. A method according to any one of claims 1 to 9 in which the thermoformable polymer of the feedstock is a thermoplastic polymer.

11. A method according to any one of claims 1 to 9 in which the thermoformable polymer of the feedstock is a thermosettable polymer.

0202041

1/2

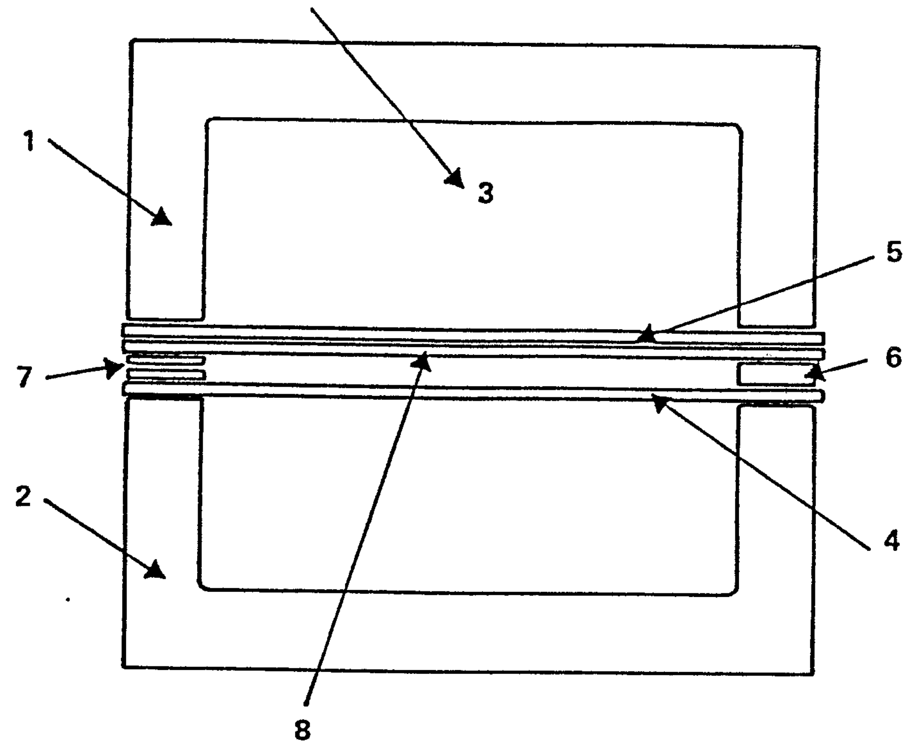


FIG 1

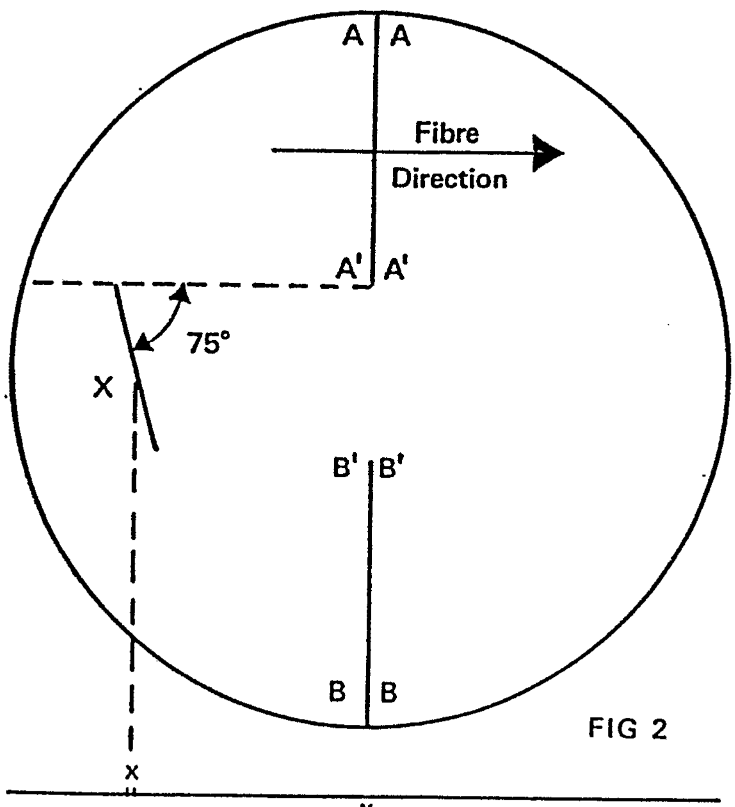


FIG 2

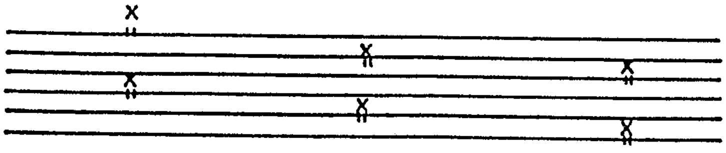


FIG 3

0202041

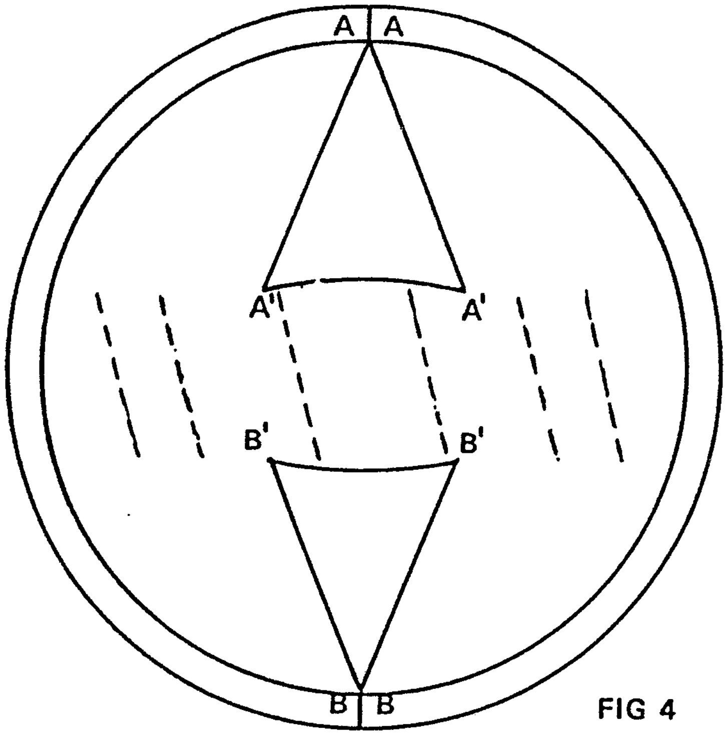


FIG 4